# EUROPEAN PATENT APPLICATION

(11) **EP 4 318 532 A1**
(43) Date of publication of application: **07.02.2024**
(21) Application number: 22926697.8
(22) Date of filing: 11.08.2022
(51) Int. Cl.: H01H 71/04, H01H 71/14, H02H 9/04

(54) **THERMAL DISCONNECTION AND INDICATION MECHANISM AND SURGE PROTECTOR**

(30) Priority: 18.02.2022 CN 202220338762 U
(71) Applicant: Chint Low Voltage Electrical Technology Co., Ltd., Shanghai 201620 (CN)
(72) Inventor: YANG, Fan, Shanghai (CN); DENG, Yingchang, Shanghai (CN); WANG, Xuli, Shanghai (CN); GUO, Shaojun, Shanghai (CN)
(74) Representative: Petraz, Gilberto Luigi
(86) International application number: PCT/CN2022/111695
(87) International publication number: WO 2023/155391

(57) **Abstract**

The present invention relates to the field of low-voltage electric appliances, in particular to a thermal disconnection and indication mechanism which is applied to a surge protection device. The thermal disconnection and indication mechanism includes: a support frame, an indication element and a push rod which are slidably disposed on the support frame respectively, a conductive sheet which is fixedly disposed on the push rod and acts synchronously with the push rod, a push rod driving member, and an indication element driving member; the conductive sheet is fixed to a second electrode of a protection element of the surge protection device by means of welding; and the indication element includes an indication portion and an indication element fitting portion which are connected in a bending manner. When the indication element is located at a first position, the indication element fitting portion is in limiting fit with the push rod. After the conductive sheet and the second electrode are disengaged from each other, the push rod driving member drives the push rod to slide to release the limiting fit from the indication element fitting portion. The indication element driving member drives the indication element to slide to a second position. The thermal disconnection and indication mechanism is simple in structure, compact in layout and reliable in action. The present invention further relates to a small-sized surge protection device including the thermal disconnection and indication mechanism.

## Description

### TECHNICAL FIELD

The present invention relates to the field of low-voltage electrical appliances, and more particularly, to a thermal disconnection and indication mechanism, and a surge protection device including the thermal disconnection and indication mechanism.

### BACKGROUND ART

A surge protection device is a protection device commonly used in a low-voltage power distribution system, and its working principle is as follows: the system keeps high impedance in the absence of power surge; when the system reaches a surge voltage threshold of a protection element, its impedance decreases with the rise of surge current and voltage, and the surge energy is discharged; and a voltage at a wire outgoing end of the system is limited to a specified limit, protecting back-end protected equipment from the impacts of surge current and transient overvoltage.

The surge protection device also has considerable safety performances itself while protecting a power grid and equipment safe. Therefore, a thermal disconnection and indication mechanism is often disposed in the surge protection device. When the surge protection device operates normally, its thermal disconnection and indication mechanism do not operate; when a protection element (e.g., a pressure-sensitive element) deteriorates or fails, the surface temperature of the protection element gradually rises; and a thermal disconnector acts while reaching an operating temperature, at this time, the faulty or deteriorated protection element is disconnected from a circuit, thereby protecting the safety of the circuit and equipment and preventing the normal operation of the power grid from being affected.

In addition, the surge protection device tends to be miniaturized to accommodate a limited assembly space while meeting current capacity requirements.

### SUMMARY OF THE INVENTION

An object of the present invention is to overcome the defects of the prior art, and provides a thermal disconnection and indication mechanism which is simple in structure, compact in layout and reliable in action, and also a small-sized surge protection device including the thermal disconnection and indication mechanism.

In order to achieve the above object, the technical scheme adopted in the present invention is as follows:
A thermal disconnection and indication mechanism, which is applied to a surge protection device and comprises: a support frame, an indication element and a push rod which are slidably disposed on the support frame respectively, a conductive sheet which is fixedly disposed on the push rod and acts synchronously with the push rod, a push rod driving member for driving the push rod, and an indication element driving member for driving the indication element to slide; the surge protection device comprises a protection element; the conductive sheet is fixed to a second electrode of the protection element by means of welding; the indication element comprises an indication portion and an indication element fitting portion which are connected in a bending manner; when the indication element is located at a first position, the indication element fitting portion is in limiting fit with the push rod; after the conductive sheet and the second electrode are disengaged from each other, the push rod driving member drives the push rod to slide to release the limiting fit from the indication element fitting portion; and the indication element driving member drives the indication element to slide to a second position.

Further, the support frame comprises a first horizontal portion and a support frame side portion which are connected in a bending manner; the indication portion is slidably disposed on the first horizontal portion; the indication element fitting portion is opposite to the support frame side portion; the push rod is slidably disposed on the support frame side portion; the push rod driving member drives the push rod to slide toward the indication portion; and the indication element driving member drives the indication element to slide, so that the indication element fitting portion moves to the support frame side portion.

Further, a sliding direction of the indication element and a sliding direction of the push rod are perpendicular to each other; and the first horizontal portion and the support frame side portion are connected vertically.

Further, the indication element fitting portion comprises an indication element boss, the push rod comprises a push rod boss, and the push rod boss is in limiting fit with the indication element boss such that the indication element is kept in the first position.

Further, the indication element boss extends to the side where the push rod is located, and/or the push rod boss extends to the side where the indication element fitting portion is located.

Further, one end of the indication element fitting portion is connected to the indication portion in a bending manner, and the indication element boss is disposed at the other end of the indication element fitting portion.

Further, the indication element driving member is an indication element tension spring, and both ends of the indication element tension spring are connected to the indication portion and the support frame respectively; the push rod driving member is a push rod tension spring, and both ends of the push rod tension spring are connected to the push rod and the support frame, respectively.

Further, the first horizontal portion comprises a first U-shaped groove formed in one end thereof, the indication element fitting portion passes through the first U-shaped groove, an indication element sliding groove is respectively formed in both sides of the indication element fitting portion, and the sliding element sliding grooves are in sliding fit with a pair of sidewalls of the first U-shaped groove respectively.

Further, the support frame side portion is provided with a push rod sliding groove, and the push rod is slidably disposed in the push rod sliding groove.

Further, the protection element and the push rod are located on both sides of the support frame side portion respectively, and the support frame side portion is provided with an electrode avoidance hole through which the second electrode passes; and
the indication element boss and the push rod boss are located between the second electrode and the indication portion.

Further, the push rod comprises a push rod limiting groove formed in the middle; the conductive sheet comprises a conductive sheet welded plate, a conductive sheet limiting plate and a conductive sheet wiring plate that are connected sequentially in a bending manner; the conductive sheet limiting plate is clamped in the push rod limiting groove; the conductive sheet welded plate and the conductive sheet wiring plate are bent to both sides of the conductive sheet limiting plate respectively, wherein the conductive sheet welded plate is bent toward the first horizontal portion, and the conductive sheet wiring plate is bent away from the first horizontal portion; the conductive sheet welded plate and the conductive sheet wiring plate are located on both sides of the push rod, respectively; and the conductive sheet welded plate and the second electrode are disposed side by side and connected by means of low-temperature alloy welding.

Further, the support frame further comprises a second horizontal portion spaced in parallel from the first horizontal portion; the first horizontal portion and the second horizontal portion are connected to both ends of the support frame side portion in a bending manner, respectively; and the first horizontal portion, the support frame side portion and the second horizontal portion are of a U-shaped structures as a whole, enclosing a space for mounting protection element.

A surge protection device, comprising the thermal disconnection and indication mechanism, and further a housing and a protection element, wherein the protection element and the thermal disconnection and indication mechanism are both disposed in the housing.

Further, further comprising a first wiring plate, wherein the first wiring plate is fixed on one end, connected to the support frame side portion, of the second horizontal portion of the support frame; and a conductive sheet wiring plate of the conductive sheet extends toward the first wiring plate and is electrically connected to the first wiring plate through a connecting wire.

Further, the surge protection device further comprises a second wiring plate fixed on the second horizontal portion of the support frame; the second wiring plate is of an L-shaped structure and comprises a wiring plate horizontal portion and a wiring plate vertical portion; the protection element further comprises an element body and a first electrode; the first electrode comprises first electrode connecting sections and a first electrode welded section; both ends of the first electrode welded section are connected to the element body through the first electrode connecting section, respectively; the first electrode welded section and the element body are spaced side by side; the wiring plate horizontal portion and the first electrode welded section are disposed side by side and fixedly connected; and the second horizontal portion comprises a second horizontal portion body and a second horizontal portion partition plate, wherein one end of the second horizontal portion partition plate is connected to the second horizontal portion body, the wiring plate horizontal portion and the first electrode are clamped between the second horizontal portion partition plate and the second horizontal portion body, and the second horizontal portion partition plate is located between the first electrode welded section and the element body.

Further, the second horizontal portion body is provided with a second horizontal portion opening, and the second horizontal portion opening is oppositely fit with the wiring plate horizontal portion; and the wiring plate horizontal portion and the first electrode welded section are provided with a welding hole, respectively.

The thermal disconnection and indication mechanism of the present invention is simple in structure, compact in layout, conducive to the miniaturization design of the surge protection device, and reliable in action. An indication element can accurately indicate a current state of the surge protection device by switching between a first position and a second position.

In addition, the support frame is in a U-shape structure, enclosing a space for mounting a protection element. In addition, the support frame is provided with a first U-shaped groove and a push rod sliding groove that are respectively in sliding fit with the indication element and a push rod, as well as corresponding connecting and mounting structures, which are convenient and reliable for assembly.

The surge protection device of the present invention includes the small-sized thermal disconnection and indication mechanism.

### BRIEF DESCRIPTION OF THE DRAWINGS

FIG. 1 is a schematic structural diagram of a surge protection device of the present invention, in which an indication hole is shown;
FIG. 2 is a schematic structural diagram of the surge protection device of the present invention, in which a first wiring plate and a second wiring plate are shown;
FIG. 3 is a schematic structural diagram of the surge protection device of the present invention from which a housing is removed, in which a thermal disconnection and indication mechanism is in a normally operated state;
FIG. 4 is a schematic structural diagram of the surge protection device of the present invention from which the housing is removed, in which the thermal disconnection and indication mechanism is in a deteriorated or faulty state;
FIG. 5 is a schematic structural diagram of a support frame of the present invention from a prospective;
FIG. 6 is a schematic structural diagram of the support frame of the present invention from another prospective;
FIG. 7 is a schematic structural diagram of a protection element of the present invention;
FIG. 8 is a schematic structural diagram of an indication element of the present invention;
FIG. 9 is a schematic structural diagram of a push rod of the present invention from a prospective;
FIG. 10 is a schematic structural diagram of the push rod of the present invention from another prospective; and
FIG. 11 is a schematic structural diagram of the second wiring plate of the present invention.

### DETAILED DESCRIPTION OF THE PREFERRED EMBODIMENTS

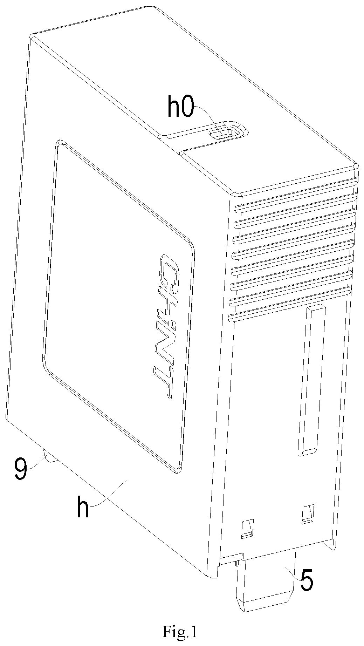

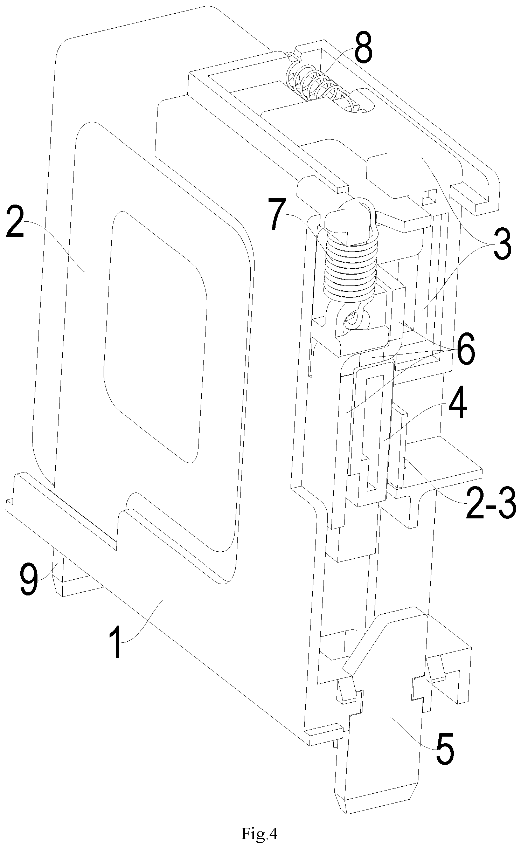

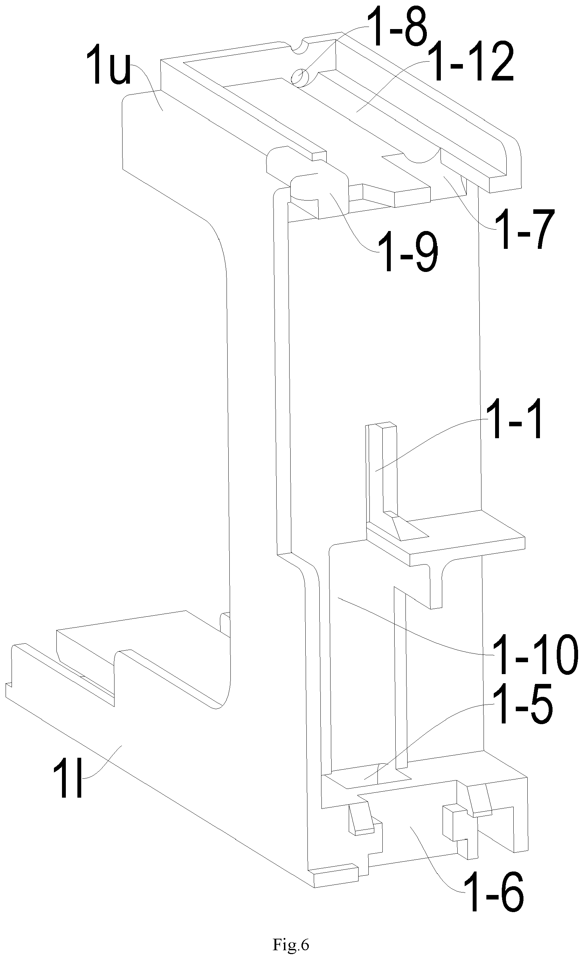

The specific implementation of a surge protection device of the present invention will be further described below with reference to the embodiments given in FIGs. 1 to 11. The surge protection device of the present invention is not limited to the description of the following embodiments.

As shown in FIGs. 1-11, an embodiment of the surge protection device of the present invention is shown.

As shown in FIGs. 1-4, the surge protection device in the present embodiment includes a housing h, and also a protection element 2 and a thermal disconnection and indication mechanism disposed in the housing h.

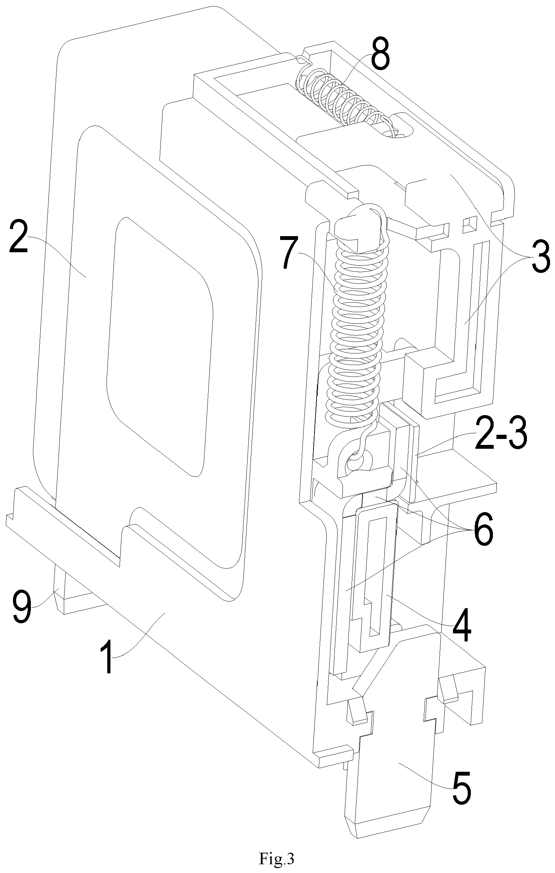

As shown in FIGs. 3-4, the thermal disconnection and indication mechanism includes: a support frame 1, an indication element 3 and a push rod 4 which are slidably disposed on the support frame 1 respectively, a conductive sheet 6 which is fixedly disposed on the push rod 4 and acts synchronously with the push rod 4, a push rod driving member 7 for driving the push rod 4 to slide, and an indication element driving member 8 for driving the indication element 3 to slide; the conductive sheet 6 is welded and fixed (e.g., fixed by means of low-temperature alloy welding) with a second electrode 2-3 of a protection element 2 of the surge protective device; the indication element 3 includes an indication portion 3h and an indication element fitting portion 3v which are connected in a bending manner; when the indication element 3 is located at a first position, the indication element fitting portion 3v is in limiting fit with the push rod 4, and the push rod driving member 7 and the indication element driving member 8 are both in an energy storage state; after the conductive sheet 6 and the second electrode 2-3 are disengaged from each other (for example, they are disengaged by means of a low-temperature alloy at the connection between the conductive sheet 6 and the second electrode 2-3 being heated and melted), the push rod driving member 7 drives the push rod 4 to slide to release the limiting fit from the indication element fitting portion 3v; the indication element driving member 8 drives the indication element 3 to slide to a second position; and the pushing rod driving member 7 and the indication element driving member 8 are both in an energy release state.

The thermal disconnection and indication mechanism is simple in structure, compact in layout, conducive to the miniaturization design of the surge protection device, and reliable in action. The indication element 3 can accurately indicate a current state of the surge protection device by switching between the first position and the second position.

Preferably, the protection element 2 is a pressure-sensitive element, a discharge gap, a gas discharge tube or a suppression diode.

As shown in FIG. 1, the housing h is provided with an indication hole H0 fitting to the indication portion 3h. Further, as shown in FIGs. 3-4, and 8, the indication portion 3h of the present embodiment includes an L-shaped structure, wherein one end of the L-shaped structure is connected to the indication element fitting portion 3v, the other end of the L-shaped structure is an indication position 3-1, and the indication position 3-1 fits to the indication hole h0. When the surge protection device operates under normal conditions, the indication position 3-1 is opposite to the indication hole h0; and when the surge protection device is in a deteriorated or faulty state, the indication element 3 slides so that the indication position 3-1 is misaligned with the indication hole h0, and the indication hole is opposite to the support frame 1. Further, the indication position 3-1 has a text or color identifier. For example: the indication position 3-1 has a green identifier, and the support frame 1 is red or a part of the support frame 1 opposite the indication hole h0 is red. When the surge protection device in the present embodiment operates under normal conditions, the indication position 3-1 is opposite to the indication hole h0 and displays green. When the surge protection device in the present embodiment is in a deteriorated or faulty state, the indication position 3-1 is misaligned with the indication hole h0, and the indication hole is opposite to the support frame 1 and displays red.

As shown in FIGs. 3-6, the support frame 1 includes a first horizontal portion 1u and a support frame side portion 1m which are connected in a bending manner; the indication portion 3h is slidably disposed on the first horizontal portion 1u; the indication element fitting portion 3v is opposite to the support frame side portion 1m; the push rod 4 is slidably disposed on the support frame side portion 1m; the push rod driving member 7 drives the push rod 4 to slide toward the indication portion 3h; and the indication element driving member 8 drives the indication element 3 to slide, so that the indication element fitting portion 3v moves to the support frame side portion 1m.

Specifically, in a direction shown in FIGs. 3-4, the push rod driving member 7 drives the push rod 4 to slide upward, and the indication element driving member 8 drives the indication element 3 to slide to the left, so that the indication element fitting portion 3v moves toward the support frame side portion 1m.

As shown in FIGs. 3-6, the support frame 1 further includes a second horizontal portion 11 spaced in parallel from the first horizontal portion 1u; the first horizontal portion 1u and the second horizontal portion 11 are connected to both ends of the support frame side portion 1m in a bending manner, respectively; and the first horizontal portion 1u, the support frame side portion 1m and the second horizontal portion 11 are of a U-shaped structure as a whole, enclosing a space for mounting the protection element 2.

As shown in FIGs. 3-4, a sliding direction of the indication element 3 and a sliding direction of the push rod 4 are perpendicular to each other.

Specifically, in a direction shown in FIGs. 3-4, the indication element 3 slides in a horizontal direction, and the push rod 4 slides in a vertical direction.

As shown in FIGs. 3, and 8-9, the indication element fitting portion 3v includes an indication element boss 3-4, the push rod 4 includes a push rod boss 4-4, and the push rod boss 4-4 is in limiting fit with the indication element boss 3-4 such that the indication element 3 is kept in the first position. Further, as shown in FIG. 3, the push rod boss 4-4 is located between the indication element boss 3-4 and the support frame side portion 1m while being in limiting fit with the indication element boss 3-4.

Preferably, the indication element boss 3-4 extends to the side where the push rod 4 is located, and/or the push rod boss 4-4 extends to the side where the indication element fitting portion 3v is located.

Preferably, as shown in FIGs. 3, and 8-9, in the surge protection device of the present embodiment, the indication element boss 3-4 extends to the side where the push rod 4 is located, and the push rod boss 4-4 extends to the side where the indication element fitting portion 3v is located. Therefore, the indication element boss 3-4 and the push rod boss 4-4 will not hinder respective movements after releasing the limiting fit from each other. Further, one end of the indication element fitting portion 3v is connected to the indication portion 3h in a bending manner, and the indication element boss 3-4 is disposed at the other end of the indication element fitting portion 3v.

As shown in FIGs. 3-4, and 6, the first horizontal portion 1u includes a first U-shaped groove 1-7 formed in one end thereof, the indication element fitting portion 3v passes through the first U-shaped groove 1-7, an indication element sliding groove 3-3 is respectively formed in both sides of the indication element fitting portion 3v, and the sliding element sliding grooves 3-3 are in sliding fit with a pair of sidewalls of the first U-shaped groove 1-7 respectively.

As shown in FIGs. 3-4, and 6, the first horizontal portion 1u further includes an indication portion sliding groove, and the indication portion 3h is slidably disposed in the indication portion sliding groove. Further, the first U-shaped groove 1-7 is formed in one end of the bottom wall of the indication portion sliding groove, and the first U-shaped groove 1-7 is communicated with the indication portion sliding groove. The first U-shaped groove 1-7 and the indication portion sliding groove ensure that the indication element 3 can slide reliably and stably in a straight line.

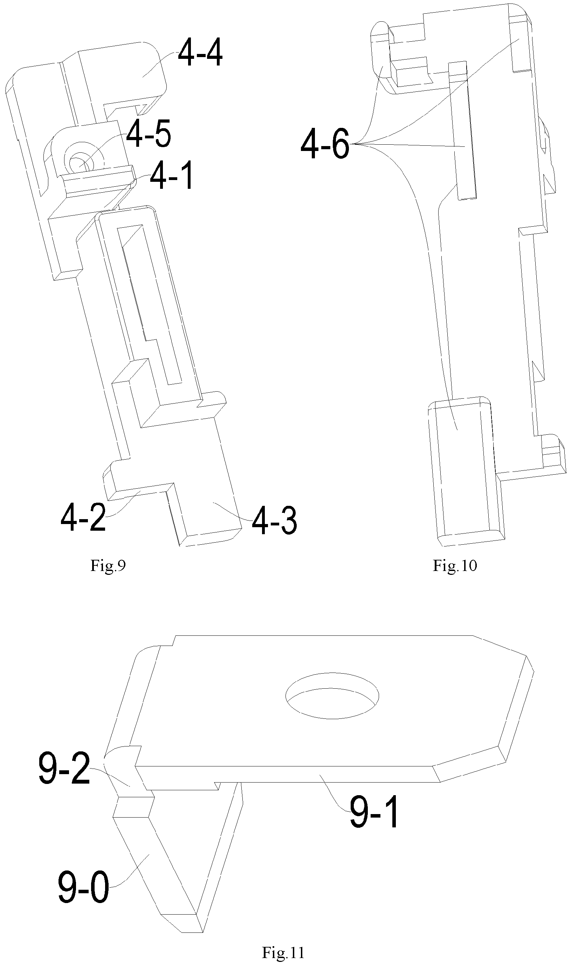

As shown in FIGs. 3-4, and 6, the support frame side portion 1m is provided with a push rod sliding groove 1-10, and the push rod 4 is slidably disposed in the push rod sliding groove 1-10, thereby ensuring that the push rod 4 is capable of moving reliably and stably in a straight line. Further, as shown in FIG. 10, a plurality of push rod slides 4-6 is disposed on one side, facing the bottom wall of the push rod sliding groove 1-10, of the push rod 4, so as to reduce a friction force between the push rod 4 and the push rod sliding groove 1-10.

As shown in FIGs. 3-6, the protection element 2 and the push rod 4 are located on both sides of the support frame side portion 1m respectively, and the support frame side portion 1m is provided with an electrode avoidance hole 1-1 through which the second electrode 2-3 of the protection element 2 passes. Further, the indication element boss 3-4 and the push rod boss 4-4 are located between the second electrode 2-3 and the indication portion 3h.

As shown in FIGs. 3-4, and 9, the push rod 4 and the conductive sheet 6 are fixedly connected in such a manner: the push rod 4 includes a push rod limiting groove 4-1 formed in the middle; the conductive sheet 6 includes a conductive sheet welded plate 6-0, a conductive sheet limiting plate 6-1 and a conductive sheet wiring plate 6-2 that are connected sequentially in a bending manner; the conductive sheet limiting plate 6-1 is clamped in the push rod limiting groove 4-1; the conductive sheet welded plate 6-0 and the conductive sheet wiring plate 6-2 are bent to both sides of the conductive sheet limiting plate 6-1 respectively, wherein the conductive sheet welded plate 6-0 is bent toward the first horizontal portion 1u, and the conductive sheet wiring plate 6-2 is bent away from the first horizontal portion 1u; the conductive sheet welded plate 6-0 and the conductive sheet wiring plate 6-2 are located on both sides of the push rod 4, respectively; and the conductive sheet welded plate 6-0 and the second electrode 2-3 are disposed side by side and connected by means of low-temperature alloy welding. Further, the conductive sheet welded plate 6-0 and the conductive sheet wiring plate 6-2 are arranged in parallel and are parallel to the sliding direction of the push rod 4, and the conductive sheet limiting plate 6-1 is perpendicular to the sliding direction of the push rod 4.

Specifically, as shown in FIGs. 3-4, when the conductive sheet welded plate 6-0 extends upward, the conductive sheet limiting plate 6-1 is horizontally clamped in the push rod limiting groove 4-1; and when the conductive sheet wiring plate 6-2 extends downward, the conductive sheet welded plate 6-0 and the conductive sheet wiring plate 6-2 are located on the front and rear sides of the push rod 4, respectively.

Preferably, the second electrode 2-3 of the protection element 2 is provided with a boss and a round hole to increase the amount of a low-temperature alloy welded on the contact surface between the second electrode and the conductive sheet 6, thereby avoiding the failure of the surge protection device to reach predetermined protection effects due to insufficient amount of the low-temperature alloy.

As shown in FIGs. 3-4, the indication element driving member 8 is an indication element tension spring, which is connected to the indication portion 3h and the support frame 1, respectively. Further, as shown in FIGs. 3-4, and 6, the bottom wall of the indication portion sliding groove of the first horizontal portion 1u is provided with a spring guide groove 1-12, and the indication element tension spring is located in the spring guide groove 1-12. Further, the spring guide groove 1-12 has an arc-shaped cross-section.

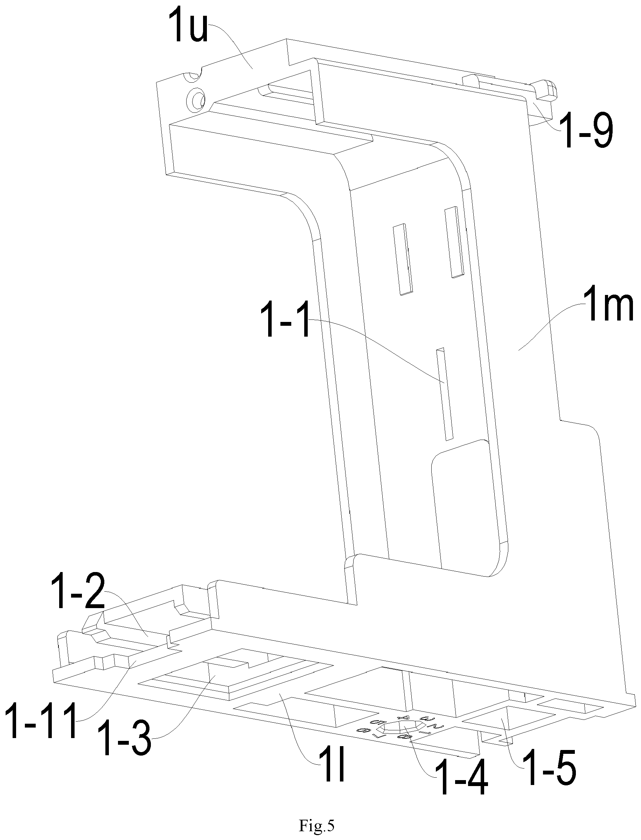

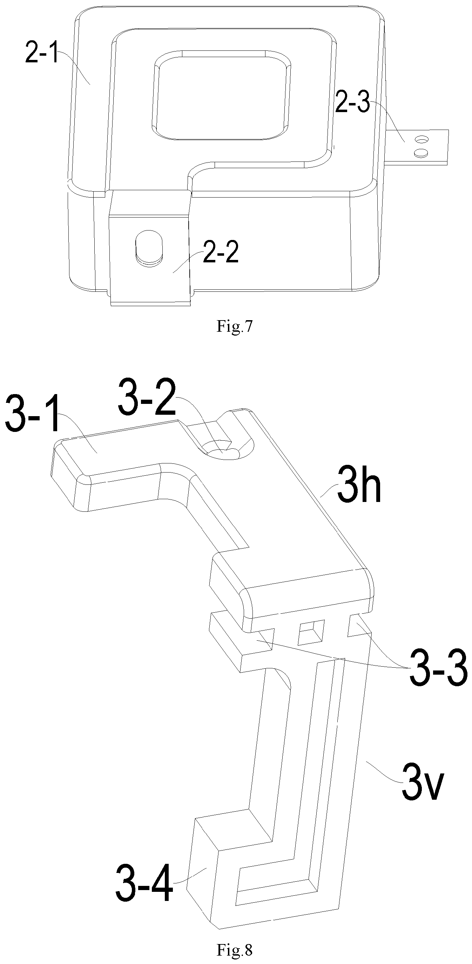

As shown in FIG. 8, the indication portion 3h of the indication element 3 is further provided with an indication element tension spring connecting hole 3-2. As shown in FIGs. 5-6, the sidewall of the indication portion sliding groove is provided with a horizontal portion spring connecting hole 1-8. As shown in FIGs. 3-4, both ends of the indication element tension spring fit to the indication element tension spring connecting hole 3-2 and the horizontal portion spring connecting hole 1-8 respectively.

As shown in FIGs. 3-4, the push rod driving member 7 is a push rod tension spring, and both ends of the push rod tension spring are connected to the push rod 4 and the support frame 1 respectively. Further, a spring limiting column 1-9 is disposed at the connection between the first horizontal portion 1u and the support frame side portion 1m. As shown in FIGs. 3-4, and 9, the push rod 4 further includes a push rod tension spring connecting portion, and the push rod tension spring connecting portion is provided with a push rod tension spring hanging hole 4-5; and one end of the push rod tension spring is connected to the push rod 4, and the other end of the push rod tension spring is connected to the spring limiting column 1-9.

Of course, the indication element driving member 8 and the push rod driving member 7 may also be other forms of elastic driving members, such as pressure springs, torsion springs or spring plates, as long as the indication element fitting portion 3v and the push rod 4 drive the indication element 3 and the push rod 4 to slide respectively after releasing the limiting fit from each other.

As shown in FIG. 8, an embodiment of the indication element 3 is shown: the indication element 3 is of an L-shaped structure as a whole, and includes an indication portion 3h and an indication element fitting portion 3v which are connected in a bending manner; the indication portion 3h is of an L-shaped structure, wherein one end of the indication portion 3h is connected to the indication element fitting portion 3v, the other end of the indication portion 3h is an indication position 3-1, and an indication element tension spring connecting hole 3-2 is also formed in the bend of the indication portion 3h; the indication element fitting portion 3v is of an L-shaped structure, wherein one end of the indication element fitting portion 3v is connected to the indication portion 3h, an indication element boss 3-4 is disposed at the other end of the indication element fitting portion 3v, and the indication element boss 3-4 and the indication position 3-2 are located on the same side of the indication element 3; and an indication element sliding groove 3-3 is respectively formed in two side edges of one end, connected to the indication portion 3h, of the indication element fitting portion 3v.

As shown in FIGs. 5-6, the second horizontal portion 11 is also provided with a second horizontal portion avoidance hole 1-5 for the push rod 4 to pass through, and the push rod 4 may pass through the second horizontal portion avoidance hole 1-5 and fit to a microswitch on a base on which the surge protection device is mounted, thereby realizing remote signal transmission to remotely monitor a current state of the surge protection device (in a normal operating state, or in a deteriorated or faulty state). Further, as shown in FIGs. 9-10, the push rod 4 further includes a push rod contact finger 4-3, wherein a limiting table 4-2 is disposed on one side of the push rod contact finger 4-3, the push rod contact finger 4-3 is inserted into the second horizontal portion avoidance hole 1-5, and the limiting table 4-2 is in limiting fit with the outer peripheral sidewall of the second horizontal portion avoidance hole 1-5.

As shown in FIGs. 9-10, an embodiment of the push rod 4 is shown: the push rod 4 is of a long rod-shaped structure, including a push rod body, a push rod limiting groove 4-1 formed in the middle of the push rod body, a push rod boss 4-4 and a push rod contact finger 4-3 respectively disposed at two ends of the push rod 4-1, a push rod tension spring connecting portion disposed on the push rod body and spaced side by side therefrom, and a plurality of push rod slides 4-6 disposed on one side of the push rod body; the push rod boss 4-4 is connected perpendicular to the push rod body, a limiting table 4-2 is disposed on one side of the push rod contact finger 4-3, and the push rod tension spring connecting portion is provided with a push rod tension spring hanging hole 4-5; and the push rod tension spring connecting portion is located between the push rod boss 4-4 and the push rod limiting groove 4-1, the push rod contact finger 4-3 and the limiting table 4-2 are located on the other side of the push rod limiting groove 4-1, and the push rod slides 4-6 and the push rod tension spring connecting portion are located on both sides of the push rod body.

As shown in FIGs. 1-4, the surge protection device in the present embodiment further includes a first wiring plate 5, wherein the first wiring plate 5 is fixed at one end, connected to the support frame side portion 1m, of the second horizontal portion 11; and a conductive sheet wiring plate 6-2 of the conductive sheet 6 extends toward the first wiring plate and is electrically connected to the first wiring plate 5 through a connecting wire, which is conductive to shortening the length of the connecting wire for connecting the first wiring plate 5 and the conductive sheet 6. Further, a first clamping groove 1-6 is formed in one end, connected to the support frame side portion 1m, of the second horizontal portion 11, a first clamping table is respectively disposed on a pair of sidewalls of the first clamping groove 1-6, a first wiring plate clamping groove is formed in two side edges of the first wiring plate 5 respectively, the first wiring plate 5 is disposed in the first clamping groove 1-6, and each first clamping table is in limiting fit with the corresponding first wiring plate clamping groove.

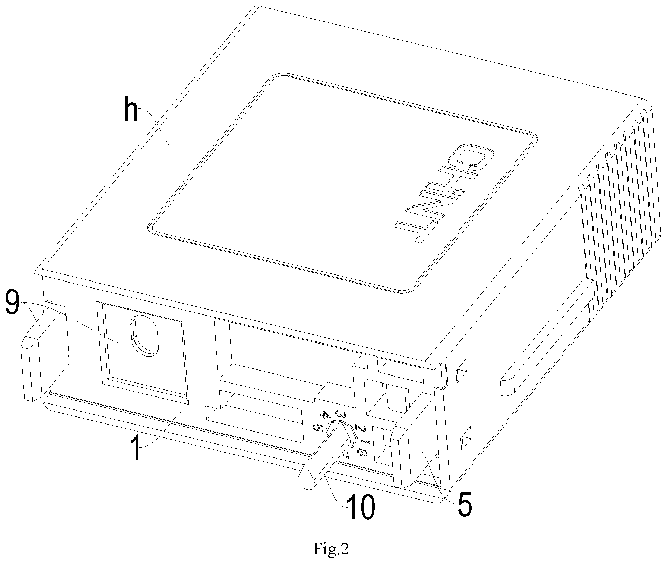

As shown in FIGs. 1-4, and 11, the surge protection device in the present embodiment further includes a second wiring plate 9; and the second wiring plate 9 is of an L-shaped structure and includes a wiring plate horizontal portion 9-1 and a wiring plate vertical portion 9-0. As shown in FIG. 7, the protection element 2 further includes an element body 2-1 and a first electrode 2-2; the first electrode 2-2 includes first electrode connecting sections and a first electrode welded section; both ends of the first electrode welded section are connected to the element body 2-1 through the first electrode connecting section, respectively; the first electrode welded section and the element body 2-1 are spaced side by side; and the wiring plate horizontal portion 9-1 and the first electrode welded section are disposed side by side and fixedly connected. As shown in FIG. 2 and FIG. 5, the second horizontal portion 11 includes a second horizontal portion body and a second horizontal portion partition plate 1-2, wherein one end of the second horizontal portion partition plate 1-2 is connected to the second horizontal portion body, the wiring plate horizontal portion 9-1 and the first electrode 2-2 are clamped between the second horizontal portion partition plate 1-2 and the second horizontal portion body, and the second horizontal portion partition plate 1-2 is located between the first electrode welded section and the element body 2-1. Further, the second horizontal portion body is provided with a second horizontal portion opening 1-3, and the second horizontal portion opening 1-3 is oppositely fit with the wiring plate horizontal portion 9-1, which facilitates the welding for the wiring plate horizontal portion 9-1 and the first electrode welded section. The wiring plate horizontal portion 9-1 and the first electrode welded section are provided with a welding hole, respectively, such that the wiring plate horizontal portion 9-1 and the first electrode welded section are welded together more firmly by means of tin soldering.

According to the surge protection device in the present embodiment, the second wiring plate 9, the protection element 2, the conductive sheet 6, the connecting wire and the first wiring plate 5 form a conductive channel.

As shown in FIG. 5, the second horizontal portion 11 of the support frame 1 is further provided with a second clamping groove 1-11 which is formed in one end of the second horizontal portion 11 away from the support frame side portion 1m. A second clamping table is respectively disposed on a pair of sidewalls of the second clamping groove 1-11, a vertical portion clamping groove 9-1 is respectively formed in two side edges of the wiring plate vertical portion 9-0 of the second wiring plate 9, the wiring plate vertical portion 9-0 is clamped in the second clamping groove 1-11, and the second clamping table fits to the vertical portion clamping groove 9-2.

As shown in FIG. 2, the surge protection device in the present embodiment further includes a limiting member 10, and the second horizontal portion 11 of the support frame 1 is also provided with a limiting member jack 1-4 for the limiting member 10 to be inserted.

As shown in FIGs. 5-6, an embodiment of the support frame 1 is shown: the support frame 1 is in a U-shaped structure as a whole, and includes a first horizontal portion 1u, a support frame side portion 1m and a second horizontal portion 11 which are connected in sequence; the first horizontal portion 1u is provided with an indication portion sliding groove, the bottom wall of the indication portion sliding groove is provided with a spring guide groove 1-12, a first U-shaped groove 1-7 is formed in one end of the bottom wall of the indication portion sliding groove close to the support frame side portion 1m, the sidewall of the indication portion sliding groove is provided with a horizontal portion spring connecting hole 1-8, and the horizontal portion spring connecting hole 1-8 and the first U-shaped groove 1-7 are located in both ends of the first horizontal portion 1u, respectively; an electrode avoidance hole 1-1 through which the second electrode 2-3 of the protection element 2 passes is formed in the middle of the support frame side portion 1m; the second horizontal portion includes a second horizontal body and a second horizontal portion partition plate 1-2, wherein one end of the second horizontal portion partition plate 1-2 is connected to the second horizontal portion body, and the other end of the second horizontal portion partition plate 1-2 and the second horizontal portion body are spaced side by side; the second horizontal portion body includes a first clamping groove 1-6 and a second clamping groove 1-11 which are formed in both ends respectively, and a second horizontal portion opening 1-3, a limiting member jack 1-4 and a second horizontal portion avoidance hole 1-5 which are formed sequentially between the second clamping groove 1-11 and the second clamping groove 1-6; and the second horizontal portion avoidance hole 1-5 and the second clamping groove 1-6 are located in one side of the support frame side portion 1m, and the second horizontal portion partition plate 1-2, the second clamping groove 1-11, the limiting member jack 1-4 and the second horizontal portion opening 1-3 are located on the other side of the support frame side portion 1m.

As shown in FIGs. 1-4, an embodiment of an assembly process of the surge protection device in the present embodiment is shown as follows.

In step 1, the conductive sheet wiring plate 6-2 and the first wiring plate 5 of the conductive sheet 6 are welded together with both ends of the connecting wire, and the conductive sheet limiting plate 6-1 of the conductive sheet 6 is then clamped in the push rod limiting groove 4-1 of the push rod 4.

In step 2, the second electrode 2-3 of the protection element 2 passes through the electrode avoidance hole 1-1 of the support frame side portion 1m, the first electrode welded section of the first electrode 2-2 of the protection element 2 is clamped between the second horizontal portion body and the second horizontal partition plate 1-2, the wiring plate horizontal portion 9-1 of the second wiring plate 9 is clamped between the second horizontal portion body and the second horizontal portion partition plate 1-2, and the wiring plate horizontal portion 9-1 and the first electrode welded section are welded together through the second horizontal portion opening 1-3.

In step 3, the push rod 4 placed in the push rod sliding groove 1-10, so that the push rod contact finger 4-3 of the push rod 4 is inserted into the second horizontal portion avoidance hole 1-5, and the limiting table 4-2 is thus in limiting fit with the outer peripheral sidewall of the second horizontal portion avoidance hole 1-5 (that is, the limiting table 4-2 props against the second horizontal portion 11); and at this time, the conductive sheet welded plate 6-0 of the conductive sheet 6 and the second electrode 2-3 are disposed side by side and are welded together using a low-temperature alloy.

In step 4, the indication portion 3h of the indication element 3 is placed in the indication portion sliding groove of the first horizontal portion 1u of the support frame 1, so that the indication element boss 3-4 of the indication element fitting portion 3v props against the push rod boss 4-4 of the push rod 4.

In step 5, both ends of the push rod tension spring (i.e., the push rod driving member 7) are connected to the push rod tension spring hanging hole 4-5 of the push rod 4 and the spring limiting column 1-9 of the support frame 1, respectively.

In step 6, both ends of the indication element tension spring (i.e., the indication element driving member 8) are connected to the indication element tension spring connecting hole 3-2 of the indication portion 3h and the horizontal portion spring connecting hole 1-8 of the first horizontal portion 1u, respectively.

In step 7, the first wiring plate 5 is clamped in the first clamping groove 1-6 of the support frame 1.

In step 8, the protection element 2, the thermal disconnection and indication mechanism, the first wiring plate 5 and the second wiring plate 9, which are assembled well, are loaded into the housing h.

It should be pointed out that the above assembly steps can be adjusted according to actual needs.

We have made further detailed description of the present invention mentioned above in combination with specific preferred embodiments, but it is not deemed that the specific embodiments of the present invention is only limited to these descriptions. A person skilled in the art can also, without departing from the concept of the present invention, make several simple deductions or substitutions, which all be deemed to fall within the protection scope of the present invention.

## Claims

1. A thermal disconnection and indication mechanism, which is applied to a surge protection device and comprises: a support frame (1), an indication element (3) and a push rod (4) which are slidably disposed on the support frame (1) respectively, a conductive sheet (6) which is fixedly disposed on the push rod (4) and acts synchronously with the push rod, a push rod driving member (7) for driving the push rod (4), and an indication element driving member (8) for driving the indication element (3) to slide; the surge protection device comprises a protection element (2); the conductive sheet (6) is fixed to a second electrode (2-3) of the protection element (2) by means of welding; the indication element (3) comprises an indication portion (3h) and an indication element fitting portion (3v) which are connected in a bending manner; when the indication element (3) is located at a first position, the indication element fitting portion (3v) is in limiting fit with the push rod (4); after the conductive sheet (6) and the second electrode (2-3) are disengaged from each other, the push rod driving member (7) drives the push rod (4) to slide to release the limiting fit from the indication element fitting portion (3v); and the indication element driving member (8) drives the indication element (3) to slide to a second position.

2. The thermal disconnection and indication mechanism according to claim 1, wherein the support frame (1) comprises a first horizontal portion (1u) and a support frame side portion (1m) which are connected in a bending manner; the indication portion (3h) is slidably disposed on the first horizontal portion (1u); the indication element fitting portion (3v) is opposite to the support frame side portion (1m); the push rod (4) is slidably disposed on the support frame side portion (1m); the push rod driving member (7) drives the push rod (4) to slide toward the indication portion (3h); and the indication element driving member (8) drives the indication element (3) to slide, so that the indication element fitting portion (3v) moves to the support frame side portion (1m).

3. The thermal disconnection and indication mechanism according to claim 2, wherein a sliding direction of the indication element (3) and a sliding direction of the push rod (4) are perpendicular to each other; and the first horizontal portion (1u) and the support frame side portion (1m) are connected vertically.

4. The thermal disconnection and indication mechanism according to claim 2, wherein the indication element fitting portion (3v) comprises an indication element boss (3-4), the push rod (4) comprises a push rod boss (4-4), and the push rod boss (4-4) is in limiting fit with the indication element boss (3-4) such that the indication element (3) is kept in the first position.

5. The thermal disconnection and indication mechanism according to claim 4, wherein the indication element boss (3-4) extends to the side where the push rod (4) is located, and/or the push rod boss (4-4) extends to the side where the indication element fitting portion (3v) is located.

6. The thermal disconnection and indication mechanism according to claim 4, wherein one end of the indication element fitting portion (3v) is connected to the indication portion (3h) in a bending manner, and the indication element boss (3-4) is disposed at the other end of the indication element fitting portion (3v).

7. The thermal disconnection and indication mechanism according to claim 1, wherein the indication element driving member (8) is an indication element tension spring, and both ends of the indication element tension spring are connected to the indication portion (3h) and the support frame (1) respectively; the push rod driving member (7) is a push rod tension spring, and both ends of the push rod tension spring are connected to the push rod (4) and the support frame (1), respectively.

8. The thermal disconnection and indication mechanism according to claim 2, wherein the first horizontal portion (1u) comprises a first U-shaped groove (1-7) formed in one end thereof, the indication element fitting portion (3v) passes through the first U-shaped groove (1-7), an indication element sliding groove (3-3) is respectively formed in both sides of the indication element fitting portion (3v), and the sliding element sliding grooves (3-3) are in sliding fit with a pair of sidewalls of the first U-shaped groove (1-7) respectively.

9. The thermal disconnection and indication mechanism according to claim 2, wherein the support frame side portion (1m) is provided with a push rod sliding groove (1-10), and the push rod (4) is slidably disposed in the push rod sliding groove (1-10).

10. The thermal disconnection and indication mechanism according to claim 4, wherein the protection element (2) and the push rod (4) are located on both sides of the support frame side portion (1m) respectively, and the support frame side portion (1m) is provided with an electrode avoidance hole (1-1) through which the second electrode (2-3) passes; and
the indication element boss (3-4) and the push rod boss (4-4) are located between the second electrode (2-3) and the indication portion (3h).

11. The thermal disconnection and indication mechanism according to claim 2, wherein the push rod (4) comprises a push rod limiting groove (4-1) formed in the middle; the conductive sheet (6) comprises a conductive sheet welded plate (6-0), a conductive sheet limiting plate (6-1) and a conductive sheet wiring plate (6-2) that are connected sequentially in a bending manner; the conductive sheet limiting plate (6-1) is clamped in the push rod limiting groove (4-1); the conductive sheet welded plate (6-0) and the conductive sheet wiring plate (6-2) are bent to both sides of the conductive sheet limiting plate (6-1) respectively, wherein the conductive sheet welded plate (6-0) is bent toward the first horizontal portion (1u), and the conductive sheet wiring plate (6-2) is bent away from the first horizontal portion (1u); the conductive sheet welded plate (6-0) and the conductive sheet wiring plate (6-2) are located on both sides of the push rod (4), respectively; and the conductive sheet welded plate (6-0) and the second electrode (2-3) are disposed side by side and connected by means of low-temperature alloy welding.

12. The thermal disconnection and indication mechanism according to claim 2, wherein the support frame (1) further comprises a second horizontal portion (1l) spaced in parallel from the first horizontal portion (1u); the first horizontal portion (1u) and the second horizontal portion (11) are connected to both ends of the support frame side portion (1m) in a bending manner, respectively; and the first horizontal portion (1u), the support frame side portion (1m) and the second horizontal portion (11) are of a U-shaped structures as a whole, enclosing a space for mounting protection element (2).

13. A surge protection device, comprising the thermal disconnection and indication mechanism according to any one of claims 1 to 12, and further a housing (h) and a protection element (2), wherein the protection element (2) and the thermal disconnection and indication mechanism are both disposed in the housing (h).

14. The surge protection device according to claim 13, further comprising a first wiring plate (5), wherein the first wiring plate (5) is fixed on one end, connected to the support frame side portion (1m), of the second horizontal portion (11) of the support frame (1); and a conductive sheet wiring plate (6-2) of the conductive sheet (6) extends toward the first wiring plate (5) and is electrically connected to the first wiring plate (5) through a connecting wire.

15. The surge protection device according to claim 13, wherein the surge protection device further comprises a second wiring plate (9) fixed on the second horizontal portion (11) of the support frame (1); the second wiring plate (9) is of an L-shaped structure and comprises a wiring plate horizontal portion (9-1) and a wiring plate vertical portion (9-0); the protection element (2) further comprises an element body (2-1) and a first electrode (2-2); the first electrode (2-2) comprises first electrode connecting sections and a first electrode welded section; both ends of the first electrode welded section are connected to the element body (2-1) through the first electrode connecting section, respectively; the first electrode welded section and the element body (2-1) are spaced side by side; the wiring plate horizontal portion (9-1) and the first electrode welded section are disposed side by side and fixedly connected; and the second horizontal portion (11) comprises a second horizontal portion body and a second horizontal portion partition plate (1-2), wherein one end of the second horizontal portion partition plate (1-2) is connected to the second horizontal portion body, the wiring plate horizontal portion (9-1) and the first electrode (2-2) are clamped between the second horizontal portion partition plate (1-2) and the second horizontal portion body, and the second horizontal portion partition plate (1-2) is located between the first electrode welded section and the element body (2-1);
the second horizontal portion body is provided with a second horizontal portion opening (1-3), and the second horizontal portion opening (1-3) is oppositely fit with the wiring plate horizontal portion (9-1); and the wiring plate horizontal portion (9-1) and the first electrode welded section are provided with a welding hole, respectively.
